**Europäisches Patentamt**

(19) **European Patent Office**

**Office européen des brevets**

(11) Numéro de publication: **0 011 579**

**B1**

(12) **FASCICULE DE BREVET EUROPEEN**

(45) Date de publication du fascicule du brevet: **20.01.82**

(21) Numéro de dépôt: **79400894.6**

(22) Date de dépôt: **20.11.79**

(51) Int. Cl.³: **G 05 G 15/08,
B 23 B 31/28, B 23 Q 11/04**

(54) Dispositif de commande en rotation d'un organe tournant récepteur.

(30) Priorité: **21.11.78 FR 7832839**

(43) Date de publication de la demande:
**28.05.80 Bulletin 80/11**

(45) Mention de la délivrance du brevet:
**20.01.82 Bulletin 82/3**

(84) Etats contractants désignés:
**DE GB IT**

(56) Documents cités:
**FR - A - 1 196 018**
**FR - A - 2 332 644**
**FR - A - 2 377 061**
**GB - A - 643 528**
**US - A - 2 901 076**
**US - A - 3 991 590**

(73) Titulaire: **SOCIETE ANONYME AUTOMOBILES
CITROEN
117 à 167, Quai André Citroen
F-75747 Paris Cedex 15 (FR)**
Titulaire: **AUTOMOBILES PEUGEOT
75, avenue de la Grande Armée
F-75116 Paris (FR)**

(72) Inventeur: **Barthelemy, André
52, route de Limours
F-78470 Saint-Remy-Les Chevreuse (FR)**

(74) Mandataire: **Michardière, Bernard et al,
Cabinet Plasseraud 84, rue d'Amsterdam
F-75009 Paris (FR)**

Courier Press, Leamington Spa, England.

## Dispositif de commande en rotation d'un organe tournant récepteur

L'invention est relative à un dispositif de commande en rotation d'un organe tournant récepteur comprenant, d'une part, un organe de manoeuvre propre à entraîner l'organe récepteur par des moyens de liaison développant une composante axiale qui dépend du couple appliqué à l'organe de manoeuvre, ledit organe de manoeuvre et ledit organe récepteur étant montés de manière à tourner coaxialement avec une possibilité de coulissement axial relatif, et d'autre part, un mécanisme d'assistance rotatif à friction pour faciliter l'entraînement de l'organe récepteur, ce mécanisme d'assistance comprenant un moteur dont l'arbre est relié par des moyens d'accouplement à friction à l'organe récepteur, ces moyens d'accouplement à friction étant commandés par le déplacement axial relatif entre l'organe récepteur et l'organe de manoeuvre, lorsque le couple appliqué à l'organe de manoeuvre depasse une valeur predeterminée.

L'invention concerne plus particulièrement parce que c'est dans ce cas que son application semble devoir présenter le plus d'intérêt, mais non exclusivement, l'entraînement d'organes tournants récepteurs faisant partie d'une machine-outil ou d'un véhicule automobile.

On connaît déjà, notamment d'après le brevet U.S. N° 2 869 383, un dispositif de commande en rotation d'un organe récepteur correspondant au préambule de la revendication 1. Les moyens d'accouplement à friction comprennent deux embrayages disposés coaxialement et destinés à tourner en sens opposés; l'enclenchement de l'un ou de l'autre embrayage est effectué par l'intermédiaire d'un manchon d'enclenchement mobile axialement relié, d'une part, à l'organe de manoeuvre par un filetage d'entraînement et, d'autre part, à l'organe récepteur par des cannelures.

Un tel dispositif de commande permet d'obtenir un effet d'assistance qui dépend directement de l'amplitude du couple exercé sur l'organe de manoeuvre. Toutefois, la solution proposée est relativement compliquée et encombrante puisqu'elle met en oeuvre deux embrayages correspondant à chacun des sens de rotation possibles.

L'invention a pour but, surtout, de rendre les dispositifs de commande du genre défini au préambule de la revendication 1 tels qu'ils soient d'un encombrement réduit et d'une réalisation simple tout en assurant une progressivité de l'assistance en dépendance directe de l'amplitude du couple exercé sur l'organe de manoeuvre.

Selon l'invention, le dispositif de commande en rotation d'un organe tournant récepteur, du genre en question, est caractérisé par le fait qu'il comporte, entre l'organe de manoeuvre et l'organe récepteur, un dispositif de transmission du mouvement de rotation, connu en lui-même, comprenant deux plateaux liés en rotation respectivement à l'organe de manoeuvre et à l'organe récepteur, l'un au moins de ces plateaux pouvant coulisser axialement, des moyens de rappel élastiques étant prévus pour solliciter les plateaux l'un vers l'autre, et des billes étant interposées entre les plateaux pour coopérer avec des surfaces inclinées prévues sur ces plateaux, des moyens étant prévus pour limiter l'écartement relatif des deux plateaux pour éviter que les billes ne s'échappent des surfaces inclinées, le plateau susceptible de se déplacer axialement étant disposé de manière à coopérer avec les moyens d'accouplement à friction de telle sorte qu'une rotation relative d'un plateau par rapport à l'autre provoque, par la coopération des billes avec les surfaces inclinées, une poussée axiale dependant du couple transmis, ce qui assure une progressivité de l'assistance.

Les avantages obtenus grâce à cette invention consistent, notamment, dans la compacité du dispositif. En effet, un seul embrayage comprenant le plateau mobile axialement et les moyens de friction intervient quel que soit le sens de rotation; la poussée axiale exercée par les billes sur le plateau de l'embrayage est proportionnelle au couple transmis par ces billes de telle sorte que l'effet d'assistance, assurée par l'embrayage, sera progressif et dépendra directement du couple exercé sur l'arbre de manoeuvre. Quelle que soit l'amplitude du couple à transmettre, les billes assurent un entraînement positif de l'organe récepteur par l'organe de manoeuvre.

Le dispositif de transmission du mouvement de rotation faisant intervenir les billes disposées entre deux plateaux et placées dans des logements présentant des surfaces inclinées est connu en lui-même.

Par exemple, le brevet FR. N° 1 196 018 montre un tel dispositif transmetteur de couple à billes, servant de limiteur de couple.

Lorsque le couple à transmettre dépasse une valeur déterminée, les billes sortent de leurs logements, et cessent de transmettre le couple et le mouvement de rotation d'un plateau à l'autre.

Le brevet G.B. N° 643 528 montre un limiteur de couple à billes du même genre.

On voit immédiatement que le dispositif de transmission du mouvement de rotation à billes, selon l'invention, accomplit une fonction et produit des résultats différents de ceux obtenus avec les limiteurs de couple antérieurs. Dans la combinaison de l'invention, les billes assurent en permanence l'entraînement positif d'un plateau par l'autre et permettent de transformer le couple de manoeuvre en une poussée axiale agissant sur les moyens de friction et dépendant directement du couple de manoeuvre. Lorsque ce couple de manoeuvre reste inférieur à un seuil déterminé, le mécanisme d'assistance à friction reste débrayé.

Avantageusement, les moyens de friction, selon l'invention, comprennent un boîtier annulaire enveloppant les deux plateaux de telle sorte que deux faces internes opposées du boîtier annulaire peuvent coopérer avec les deux plateaux pour assurer l'embrayage à friction. Le boîtier limite l'écartement des plateaux, évitant l'échappement des billes. Cette construction est particulièrement compacte.

De préférence, le boîtier comporte sur sa périphérie extérieure des dents de manière à pouvoir coopérer avec un pignon entraîné par le moteur.

On prévoit des moyens de contact électrique commandés par le déplacement axial de l'un des plateaux ou de l'un des arbres liés à ces plateaux, par rapport à une partie fixe, déplacement provoqué soit par l'écartement des plateaux par les billes, soit par réaction axiale d'une denture d'un pignon prévue inclinée; ces moyens de contact électrique servent à commander les moyens d'assistance notamment lorsque ces derniers comprennent un moteur électrique.

L'invention consiste, mises à part les dispositions exposées ci-dessus, en certaines autres dispositions dont il sera plus explicitement question ci-après à propos de modes de réalisation particuliers décrits avec référence aux dessins ci-annexés mais qui ne sont nullement limitatifs:

— la figure 1 de ces dessins est un schéma d'un dispositif de commande selon l'invention,

— la figure 2 montre, en coupe, avec parties en extérieur, un premier mode de réalisation d'un dispositif conforme à l'invention.

— la figure 3 est une vue de face montrant une partie des plateaux et du dispositif de la figure 2, avec les ressorts de rappel angulaire,

— la figure 4 est une coupe axiale d'un second mode de réalisation conforme à l'invention,

— la figure 5 est une vue partielle de gauche par rapport à la figure 4,

— la figure 6, enfin, est un schéma d'un autre mode de réalisation possible.

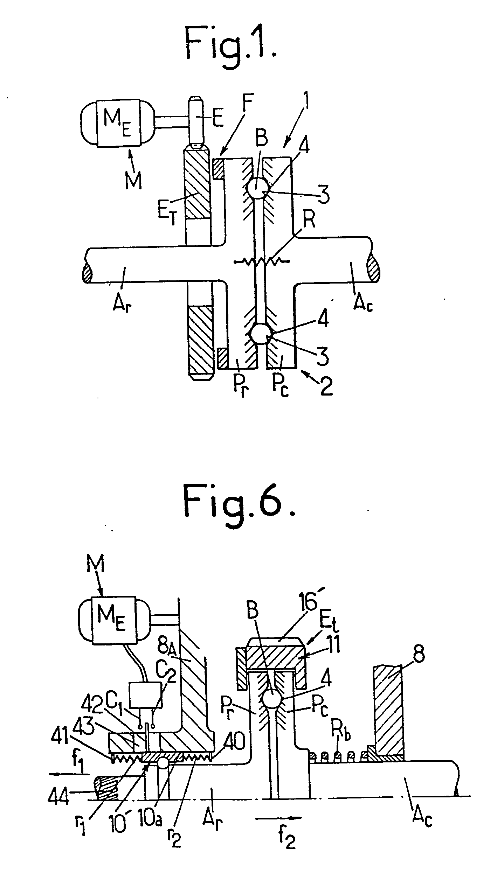

En se reportant à la figure 1 des dessins, on peut voir un dispositif 1 de commande en rotation d'un organe tournant récepteur $A_r$, dispositif qui comprend, d'une part, un organe de manoeuvre $A_c$ propre à entraîner positivement l'organe récepteur $A_r$ et, d'autre part, un mécanisme d'assistance rotatif à friction M pour faciliter l'entraînement de l'organe récepteur $A_r$.

Un dispositif de transmission 2 de mouvement de rotation est prévu directement entre l'organe de manoeuvre $A_c$ et l'organe récepteur $A_r$. Ce dispositif comprend deux plateaux $P_c$ et $P_r$ liés en rotation respectivement à l'organe de manoeuvre $A_c$ et à l'organe récepteur $A_r$.

L'un au moins de ces plateaux peut coulisser axialement; dans la représentation schématique de la figure 1, le plateau $P_r$ solidaire en rotation et en translation de l'organe récepteur $A_r$ peut coulisser axialement avec cet organe récepteur $A_r$.

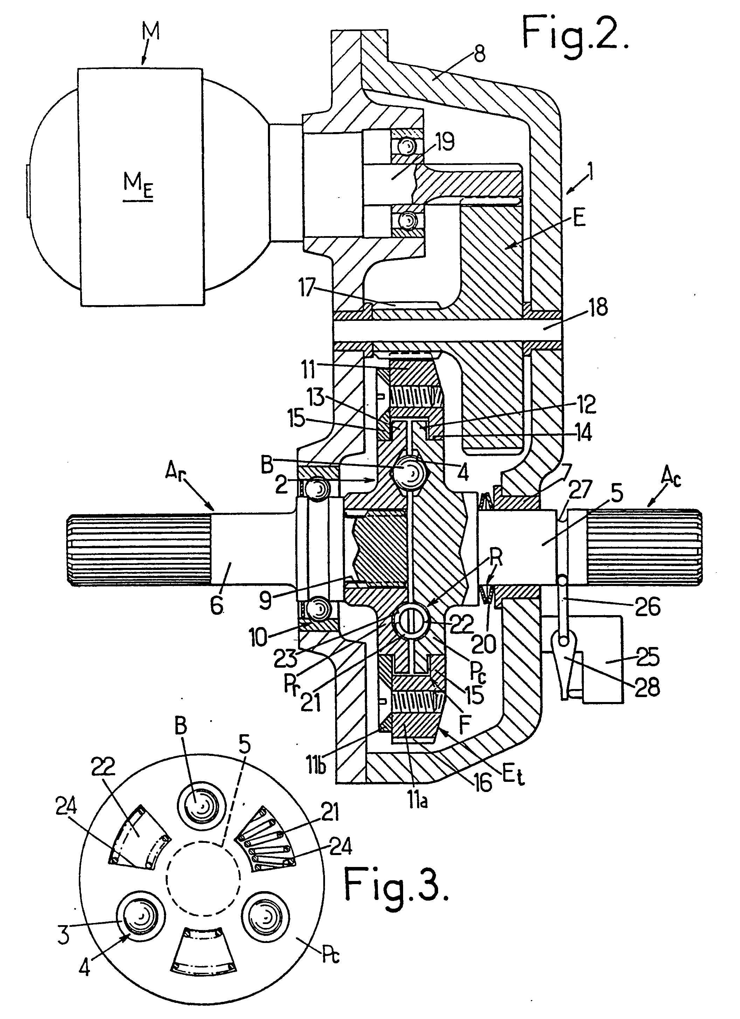

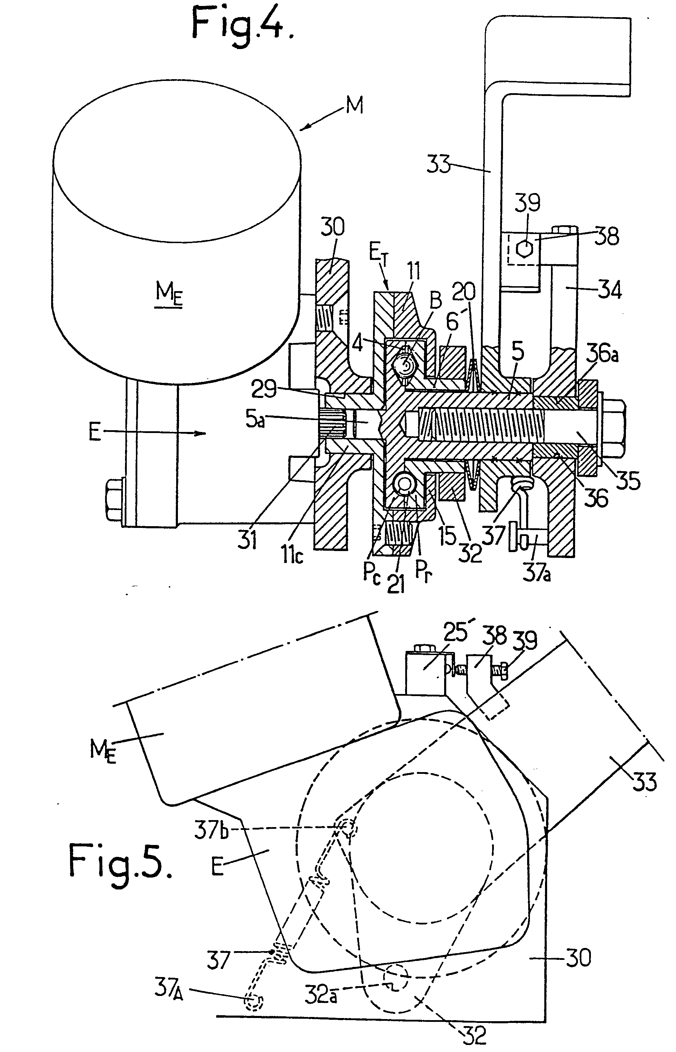

Des moyens de rappel élastiques R sont prévus pour solliciter les plateaux l'un vers l'autre; des billes B sont interposées entre les plateaux $P_c$ et $P_r$ pour coopérer avec des surfaces inclinées prévues sur les plateaux. Ces surfaces inclinées 3 sont formées par des fonds inclinés ou incurvés embrèvements 4 formés dans les faces se faisant vis-à-vis des deux plateaux. Les embrèvements 4 sont généralement formés par des trous coniques comme mieux visible sur les figures 2 et 4.

Une rotation relative d'un plateau par rapport à l'autre, quel que soit le sens de cette rotation, provoque, par la coopération des billes B avec les surfaces inclinées 3, l'écartement de ces plateaux et le déplacement axial de celui de ces plateaux ($P_r$ dans le cas de la figure 1) qui peut se déplacer.

Des moyens d'accouplement à friction F sont prévus entre une sortie $E_t$ du mécanisme d'assistance et au moins celui ($P_r$) des plateaux qui peut se déplacer axialement.

Le mécanisme d'assistance M peut comprendre un moteur électrique $M_E$ dont l'arbre entraîne un pignon $E_t$ formant sortie du mécanisme d'assistance, par l'intermédiaire d'un train d'engrenages tel que E.

Les billes B assurent l'accouplement positif des organes de manoeuvre $A_c$ et récepteur $A_r$, et exercent une force d'écartement des plateaux $P_r$ et $P_c$ (et par suite une pression de contact de l'accouplement à friction F) d'autant plus élevée que le couple transmis de $A_c$ vers $A_r$ par les billes B est plus grand.

L'accouplement à friction du mécanisme d'assistance M n'intervient qu'au-delà d'un seuil minimal déterminé de l'effort ou du couple de manoeuvre exercé sur l'organe $A_c$, seuil auquel correspond l'écartement axial déterminé des plateaux $P_r$ et $P_c$ qui assure la friction contre la sortie $E_t$ du mécanisme d'assistance. Des moyens sont prévus pour limiter l'écartement relatif des deux plateaux pour éviter que les billes B ne s'échappent des embrèvements 4.

En se reportant à la figure 2, on peut voir un mode de réalisation du dispositif 1 dans lequel l'organe de manoeuvre $A_c$ et l'organe récepteur $A_r$ sont constitués par deux arbres tournants 5, 6, situés dans le prolongement l'un de l'autre. Les plateaux $P_c$ et $P_r$ sont prévus aux extrémités des deux arbres 5 et 6 voisines l'une de l'autre; les plans moyens de ces plateaux sont perpendiculaires aux axes géométriques des arbres 5 et 6.

Le plateau $P_c$ est solidaire, en rotation et en translation, de l'arbre 5, lequel est monté dans un palier 7 d'un carter 8, avec une possibilité de coulissement axial. Le plateau $P_r$ comporte une ouverture centrale 9 munie de cannelures propres à coopérer avec des cannelures complémentaires prévues à l'extrémité de l'arbre 6 engagée dans cette ouverture 9. Le plateau $P_r$ est donc seulement lié en rotation à l'arbre 6, et peut coulisser axialement par rapport à cet arbre, lequel est porté par un palier à billes 10 logé dans une ouverture du carter 8.

La sortie $E_t$ du mécanisme d'assistance M constitue également l'élément de friction F et est réalisée sous la forme d'un boîtier annulaire 11 enveloppant les bords périphériques circulaires 12, 13, des plateaux $P_c$ et $P_r$. Comme visible sur la figure 2, chaque bord 12, 13, comporte un évidement périphérique 14 s'ouvrant vers l'extérieur; chaque évidement 14 est destiné à recevoir une collerette telle que 15, solidaire du boîtier 11, et faisant saillie radialement vers l'intérieur. On voit que les parties de plus faible épaisseur des bords 12 et 13, sont enserrées entre les collerettes 15; l'entraînement par friction est réalisé par la venue en contact des faces extérieures des parties de plus faible épaisseur des bords 12 et 13, avec les faces internes des collerettes 15, perpendiculaires à l'axe géométrique des arbres 5 et 6.

Le boîtier 11 est positionné au moins axialement par les plateaux $P_c$ et $P_r$; dans le mode de réalisation de la figure 2, le boîtier 11 est également positionné radialement par ces plateaux.

Ce boîtier 11 est réalisé en deux parties comprenant un corps 11a muni, d'un côté, d'une collerette 15, corps sur lequel est fixée, de manière démontable, une couronne 11b formant, par sa partie intérieure dans le sens radial, l'autre collerette 15.

Le corps 11a comporte sur sa périphérie extérieure des dents 16 de manière à pouvoir coopérer avec un pignon 17 porté, à l'intérieur du carter 8, par un arbre 18 parallèle à l'axe géométrique des arbres 5 et 6. Le pignon 17 appartient au train d'engrenages E transmettant le mouvement de rotation, suivant un rapport déterminé, à partir de l'arbre de sortie 19 du moteur. Comme visible sur le figure 2, cet arbre 19 est disposé parallèlement aux arbres 5 et 6 et fait saillie intérieurement dans le carter 8 par une partie cannelée pour coopérer avec le train d'engrenages E. Le moteur électrique $M_E$ est situé à l'extérieur du carter 8, notamment du même côté que l'arbre 6 par rapport à ce carter.

Les moyens de rappel élastiques R, propres à solliciter les plateaux $P_c$ et $P_r$ l'un vers l'autre, comprennent des ressorts à effet axial tels que des rondelles 20 type "Belleville" coaxiales aux plateaux et centrées sur au moins l'un des arbres 5, 6. Dans le cas du mode de réalisation de la figure 2, où l'arbre 5 est monté avec une possibilité de coulissement, ces rondelles 20 sont disposées à l'intérieur du carter 8 entre un épaulement de l'arbre 5 et le palier 7 solidaire du carter 8 et sont centrées sur l'arbre 5.

Les moyens R de rappel élastiques comprennent également des ressorts de rappel angulaire 21 (figures 2 et 3) constitués par des ressorts de compression en hélice, logés dans des évidements 22, 23 prévus dans les faces en regard des plateaux $P_c$ et $P_r$. La section transversale de chaque évidement 22, 23, a une forme semi-circulaire. Chaque ressort 21 est donc engagé sur sensiblement la moitié d'une section de spire dans chaque logement 22, 23. Ces logements sont fermés, suivant le sens circonférentiel, par des parois d'extrémité telles que 24 (figure 3). En position relative moyenne des arbres 5 et 6, les parois 24 des extrémités voisines des logements 22, 23, ont même position angulaire; dès qu'une rotation relative se produit entre l'arbre 5 et l'arbre 6, lesdites parois d'extrémités du logement 22 sont décalées angulairement par rapport à celles du logement 23. Le ressort 21 est alors en butée, à une extrémité, sensiblement sur la moitié de sa section, contre le plateau $P_c$ et à son autre extrémité contre le plateau $P_r$; quel que soit le sens de rotation relatif entre l'arbre 5 et l'arbre 6, le ressort 21 sera toujours comprimé et aura tendance à rappeler les plateaux et les arbres dans leur position moyenne.

On peut prévoir trois ressorts de rappel angulaire 21 répartis régulièrement suivant le circonférence, et trois billes B réparties régulièrement entre ces ressorts.

La position moyenne des arbres 5 et 6 et des plateaux correspond à la position angulaire stable pour laquelle les embrèvements respectifs 4 des plateaux $P_r$ et $P_c$ sont alignés deux à deux, ce qui assure le rapprochement maximal desdits plateaux.

L'accouplement à friction des plateaux et de l'élément tournant $E_t$ (boîtier 11) s'effectue de préférence avec un contact liquide, auquel cas le carter 8 peut notamment contenir de l'huile, ou gras, de manière à assurer une plus grande progressivité d'entraînement et une meilleure évacuation de la chaleur produite par la friction. Dans le cas où le carter 8 est rempli, au moins partiellement, d'huile, les traversées d'arbres sont, naturellement, fermées de manière étanche.

L'entraînement à friction par le mécanisme d'assistance M peut, selon les cas, s'effectuer dans un seul sens, ou dans les deux sens.

Dans le cas où l'entraînement à friction ne s'effectue que dans un seul sens, on peut prévoir un contact électrique tel que 25 commandé par le déplacement axial de l'arbre 5 ou du plateau mobile axialement ($P_c$). Ce contact électrique commande la mise en rotation du moteur électrique $M_E$ dans le sens de rotation approprié. La mise en marche de ce moteur $M_E$ est commandée avant que l'effort de manoeuvre sur l'organe $A_c$ n'atteigne le seuil inférieur correspondant au début d'embrayage à friction entre plateaux $P_c$, $P_r$ et boîtier annulaire 11.

Pour cette commande, on prévoit, par exemple, un doigt 26 monté rotatif sur le boîtier du contact 25; ce doigt 26 coopère avec une gorge 27 de l'arbre 5 et agit sur un levier 28 qui commande directement le poussoir de manoeuvre du contact électrique 25.

Dans le cas où l'entraînement par friction, par le mécanisme d'assistance, doit s'effectuer dans les deux sens, deux contacts électriques (non montrés dans le cas de la figure 2) sont prévus pour commander la rotation du moteur $M_E$ dans le sens approprié; l'actionnement de ces contacts électriques est assuré par un dispositif (par exemple torsiomètre) sensible au sens et à l'amplitude de l'effort de manoeuvre exercé sur l'arbre $A_c$. Là encore, le moteur $M_E$ est mis en rotation pour un seuil de l'effort de manoeuvre inférieur à celui qui provoque le début de l'embrayage à friction entre plateaux et boîtier annulaire.

En se reportant aux figures 4 et 5, on peut voir un mode de réalisation légèrement différent de celui des figures 2 et 3. Les éléments du dispositif semblables ou ayant des fonctions analogues à ceux des figures 2 et 3 sont designés par les mêmes références, sans que leur description soit reprise en détail.

L'organe de manoeuvre $A_c$ est toujours constitué par un arbre 5 portant le plateau $P_c$.

L'organe récepteur $A_r$ est constitué par un manchon 6' engagé autour de l'arbre 5. Ce manchon 6' porte le plateau $P_r$. Le manchon 6' est situé, par rapport au plateau $P_c$, du même côté que l'arbre 5, de telle sorte que les faces en regard des plateaux $P_r$ et $P_c$, dans lesquelles sont prévus les embrèvements 4 sont, également, situées du côté de l'arbre 5 par rapport au plateau $P_c$. Le boîtier 11 est positionné axialement par les plateaux, mais est centré, radialement, par une portée 11c en forme de manchon engagé dans un alésage 29 prévu dans une paroi fixe 30 servant de support. Le moteur électrique $M_E$ et les moyens d'engrenage E sont supportés par cette paroi 30 du côté opposé au boîtier 11 et à l'arbre 5. Les moyens d'engrenage E comportent un arbre de sortie 31 cannelé qui coopère avec des cannelures complémentaires prévues à l'intérieur du manchon 11c de manière à assurer l'entraînement en rotation du boîtier 11.

L'arbre 5 comporte au-delà du plateau $P_c$ un prolongement axial 5a s'engageant dans le manchon 11c, avec une liberté de rotation, pour assurer le centrage relatif du boîtier 11 at de l'arbre. Il est à noter que l'ensemble du boîtier 11 et des plateaux ne se trouve plus enfermé à l'intérieur d'un carter comme dans le cas de la figure 2.

Un flasque 32 est fixé à l'extrémité du manchon 6' éloignée du plateau $P_r$. La collerette 15 est située entre ce flasque 32 et le plateau $P_r$. Comme visible sur la figure 5, le flasque 32 comporte une extension radiale comportant un trou 32a pour une liaison à une tige ou à un câble de commande. L'arbre 5 est lié en rotation à l'organe de manoeuvre qui comprend, dans le cas de la réalisation des figures 4 et 5, un levier de commande 33 monté autour de l'extrémité de l'arbre 5 éloignée du plateau $P_c$.

Le plateau $P_r$ et le manchon 6' sont montés libres en translation autour de l'arbre 5, et les rondelles élastiques de rappel 20 sont comprimées entre, d'une part, l'extrémité du manchon 6' et le flasque 32, et d'autre part, le levier 33.

L'arbre 5 est monté libre en rotation sur une plaque support 34; le montage est assuré en prévoyant un trou taraudé axial borgne dans l'arbre 5, trou qui reçoit une vis 35, laquelle assure le blocage contre l'extrémité de l'arbre 5, d'un manchon 36 formant palier et monté libre en rotation dans une ouverture 36a du support 34. Un ressort 37, tendu entre un pion 37a solidaire de la paroi 34 et un autre pion 37b solidaire du levier 33, assure le rappel de ce levier en position de repos. Une patte 38, solidaire du levier 33, est munie d'une vis de pression 39 qui, lorsque le levier 33 est au repos, est en appui contre un contact électrique 25'. Ce contact 25' commande la mise en marche du moteur électrique $M_E$. Dès que le levier 33 est déplacé, le contact 25' se ferme (par exemple) et le moteur d'assistance $M_E$ est mis en marche.

On retrouve, naturellement, dans le cas des figures 4 et 5, les billes B logées dans les embrèvements 4 entre les plateaux; on retrouve aussi les ressorts 21 de rappel angulaire.

Le fonctionnement des dispositifs de commande représentés aux figures 2 à 5 résulte immédiatement des explications précédentes.

En exerçant sur l'organe de commande 5 un couple de manoeuvre, on entraîne positivement l'organe récepteur 6 par l'intermédiaire des billes B coopérant avec les plateaux $P_c$, $P_r$.

Tant que ce couple de manoeuvre reste inférieur à une première valeur déterminée, le moteur électrique $M_E$ reste à l'arrêt.

Dès que le couple de manoeuvre atteint la susdite valeur déterminée, le moteur $M_E$ est mis en marche, mais il n'y a toujours pas embrayage à friction.

L'entraînement de l'arbre 6 est encore effectué sans assistance.

Lorsque le couple de manoeuvre atteint un seuil déterminé, les billes B provoquent, à l'encontre des moyens de rappel élastiques R, un écartement suffisant des plateaux pour que l'embrayage à friction se produise.

L'assistance pour l'entraînement de l'arbre 6 intervient alors.

La pression du contact des parties frottantes (boîtier 11 et plateaux $P_r$, $P_c$) est d'autant plus élevée que le couple de manoeuvre (effort de manoeuvre) est plus grand étant donné que les billes B au contact avec le fond incliné des embrèvements 4 engendrent sur les plateaux des poussées axiales, tendant à les écarter, proportionnelles aux efforts tangentiels dus, au droit des billes, au couple qu'elles transmettent. Il y a donc progressivité de l'assistance.

En se reportant à la figure 6, on peut voir le schéma d'une variante de réalisation permettant de commander deux contacts électriques différents selon le sens de rotation relative entre les plateaux, en utilisant une réaction de denture inclinée.

Le dispositif de le figure 6 est du genre de celui montré sur les figures 2 et 3 et les éléments identiques ou jouant des rôles semblables sont désignés par les mêmes références, sans que leur description soit reprise.

Toutefois, l'organe récepteur $A_r$ est monté avec une possibilité de coulissement axial dans la paroi $8_A$ du carter 8. Pour cela, le roulement 10' portant l'arbre récepteur est monté libre en translation dans le logement de la paroi 8. La bague 10a de roulement est soumise à l'action de deux ressorts antagonistes $r_1$ et $r_2$ en appui contre des bagues 40, 41, fixes axialement, ancrées dans des gorges prévues aux deux extrémités axiales du logement.

Un organe de commande 42, par exemple formé par un doigt, traverse une ouverture 43 de la paroi du logement pour le roulement 10'. Le doigt 42 est lié en translation au roulement 10' et l'organe $A_r$ peut commander, selon le sens de déplacement, soit un contact électrique $C_1$ (déplacement vers la gauche de la figure 6), soit un contact électrique $C_2$ (déplacement vers la droite de la figure 6); chaque contact $C_1$, $C_2$, commande le mise en marche du moteur électrique $M_E$ dans un sens de rotation particulier, correspondant au déplacement angulaire relatif des plateaux $P_r$, $P_c$.

L'extrémité de l'arbre $A_r$ est munie d'une denture 44 inclinée sur l'axe géométrique de cet arbre, de telle sorte que la transmission du couple s'accompagne d'un effort axial dont le sens dépend du sens de rotation de l'arbre $A_r$.

Les moyens de rappel élastiques des plateaux comprennent un ressort $R_b$ (ressort en hélice ou rondelles élastiques) entre la paroi du carter 8 et le plateau $P_c$.

Le boîtier 11 comporte une denture externe 16' (droite ou inclinée) telle que l'entraînement en rotation du boîtier s'accompagne d'une poussée axiale négligeable ou dans le même sens que celle produite par la denture 44.

Le fonctionnement du dispositif selon le schéma de la figure 6 est le suivant.

Au repos, il y a équilibre axial entre les ressorts $R_b$, $r_1$ et $r_2$.

Pour un premier sens de rotation de l'organe de commande $A_c$, l'arbre $A_r$ est entraîné en rotation, dans le même sens, par les billes B. Du fait de l'inclinaison de la denture 44, une force axiale se produit suivant le sens de la flèche $f_1$ et provoque le coulissement de l'organe récepteur $A_r$ et du roulement 10' suivant la flèche $f_1$. Le ressort $r_1$ est comprimé, tandis que les ressorts $r_2$ et $R_b$ sont légèrement détendus.

Le contact $C_1$ est fermé, ce qui provoque la rotation du moteur $M_E$ dans le sens propre à faire tourner le boîtier 11 dans le même sens que $A_c$ et $A_r$.

La poussée axiale éventuelle, due à l'inclinaison éventuelle de la denture 16', permet:

— de confirmer la mise en appui axial de l'organe $A_r$ en butée comprimant $r_1$;

— d'ajouter sur le plateau $P_c$, donc sur l'arbre $A_c$, un effort axial compensant la diminution de poussée du ressort $R_b$ évoquée précédemment.

Quand l'effort (couple de manoeuvre) sur $A_c$ augmente, $P_c$ et $P_r$ s'écartent; le ressort $r_1$ formant butée, seul le ressort $R_b$ se comprime.

Il est à noter que l'écartement des plateaux $P_r$ et $P_c$ est de l'ordre de quelques diziémes de millimètres seulement, c'est-à-dire inférieur à la flèche des ressorts $r_1$ ou $r_2$ qui est de l'ordre de 1 mm (un millimètre).

Pour le sens de rotation opposé de l'arbre $A_c$, l'arbre $A_r$ coulisse dans le sens opposé suivant la flèche $F_2$. Le ressort $r_2$ se comprime jusqu'à mise en butée. Le ressort $r_1$ se détend tandis que le ressort $R_b$ se comprime légèrement.

Le contact $C_2$ est actionné par le doigt 42 et commande la mise en marche du moteur $M_E$ dans le sens qui entraîne le boîtier 11 dans le même sens que $A_c$. Eventuellement, si la denture 16' est inclinée, le boîtier 11 se trouve poussé axialement suivant la flèche $f_2$, confirmant ainsi la mise en appui axial de $A_r$ contre le ressort $r_2$ mais n'exerçant aucune poussée sur le plateau $P_c$.

Quand l'effort de manoeuvre (couple de rotation) sur l'arbre $A_c$ augmente, les billes B en coopérant avec les rampes inclinées écartent les plateaux $P_r$ et $P_c$: le plateau $P_r$ en butée axiale contre $r_2$ reste immobile, la butée axiale étant confirmée par la poussée axiale due à l'inclinaison de la denture, poussée d'autant plus forte que le couple d'assistance, croissant avec la pression entre le boîtier 11 et les plateaux $P_r$ et $P_c$, est plus important.

Le plateau $P_c$ est poussé dans le sens de la flèche $f_2$ à l'encontre du ressort $R_b$.

Il est à noter que le couple de manoeuvre minimal (seuil $S_1$), à exercer sur l'arbre $A_c$ pour comprimer les ressorts $r_1$ ou $r_2$ et actionner les contacts $C_1$ ou $C_2$, peut provoquer un léger écartement des plateaux $P_r$, $P_c$ par coopération des billes B et des rampes, mais cet écartement est insuffisant pour assurer l'embrayage du boîtier 11 contre les plateaux $P_r$ et $P_c$, cet embrayage ne s'amorçant que pour un seuil $S_2$ du couple $A_c$ supérieur à $S_1$.

Selon une autre possibilité, le seuil $S_1$ peut être inférieur au seuil correspondant au début de l'écartement des plateaux $P_r$, $P_c$ notamment si l'on utilise des ressorts de rappel angulaire précontraints tels que les ressorts 21 de la figure 3.

Le ressort $r_2$ pourrait être supprimé, l'équilibre au repos étant alors assuré par $r_1$ et $R_b$ seuls et un espace étant prévu, au repos, entre la bague 40 et la bague coulissante du roulement 10' pour permettre le déplacement du doigt 42 propre à actionner le contact $C_2$.

Selon une variante, l'actionnement des contacts tels que $C_1$ et $C_2$ pourrait s'effectuer par coulissement de l'arbre $A_c$ au lieu de $A_r$, par exemple en utilisant un engrenage à denture inclinée disposé entre l'arbre $A_c$ et le levier de commande du genre du levier 33 de la figure 4.

Il est à noter que le doigt de commande 42 pourrait être relié directement axialement à l'arbre A$_r$ au lieu d'être relié à la bague de roulement 10' comme représenté sur la figure 6.

Le dispositif de l'invention convient à de nombreuses applications, notamment dans les domaines de l'automobile et de la machine-outil, où interviennent des commandes manuelles ou au pied.

**Revendications**

1. Dispositif de commande en rotation d'un organe tournant récepteur (A$_r$) comprenant, d'une part, un organe de manoeuvre (A$_c$) propre à entraîner l'organe récepteur par des moyens de liaison développant une composante axiale qui dépend du couple appliqué à l'organe de manoeuvre, ledit organe de manoeuvre et ledit organe récepteur étant montés de manière à tourner coaxialement avec une possibilité de coulissement axial relatif et, d'autre part, un mécanisme d'assistance (M) rotatif à friction pour faciliter l'entraînement de l'organe récepteur, ce mécanisme d'assistance comprenant un moteur (M$_E$) dont l'arbre est relié par des moyens d'accouplement à friction (F) à l'organe récepteur, ces moyens d'accouplement à friction étant commandés par le déplacement axial relatif entre l'organe récepteur et l'organe de manoeuvre correspondant à une valeur predeterminée du couple appliqué à l'organe de manoeuvre, caractérisé par le fait qu'il comporte entre l'organe de manoeuvre et l'organe récepteur un dispositif de transmission (2) du mouvement de rotation, connu en lui-même, comprenant deux plateaux (P$_c$, P$_r$) liés en rotation respectivement à l'organe de manoeuvre et à l'organe récepteur, l'un au moins de ces plateaux pouvant coulisser axialement, des moyens de rappel élastiques (R) étant prévus pour solliciter les plateaux l'un vers l'autre, et des billes (B) étant interposées entre les plateaux pour coopérer avec des surfaces inclinées (3, 4) prévues sur ces plateaux, des moyens étant prévus pour limiter l'écartement relatif des deux plateaux, pour éviter que les billes ne s'échappent des surfaces inclinées, le plateau susceptible de se déplacer axialement étant disposé de manière à coopérer avec les moyens d'accouplement à friction (F) de telle sorte qu'une rotation relative d'un plateau par rapport à l'autre provoque, par la coopération des billes avec les surfaces inclinées, une poussée axiale dépendant du couple transmis, ce qui assure une progressivité de l'assistance.

2. Dispositif selon la revendication 1, caractérisé par le fait que les moyens d'accouplement à friction comprennent un boîtier annulaire (11) enveloppant les deux plateaux (P$_c$, P$_r$) de telle sorte que deux faces internes opposées du boîtier annulaire peuvent coopérer avec les deux plateaux pour assurer l'embrayage à friction.

3. Dispositif selon la revendication 2, caractérisé par le fait que le boîtier annulaire (11) comporte sur sa périphérie extérieur des dents (16, 16') de manière à pouvoir coopérer avec un pignon entraîné par le moteur.

4. Dispositif selon l'une quelconque des revendications 1 ou 2, caractérisé par le fait que l'un des organes, notamment l'organe de manoeuvre, est constitué par un arbre (5) portant l'un des plateaux, l'autre organe, notamment l'organe récepteur, étant constitué par un manchon (6') engagé autour de l'arbre (5) formant organe de manoeuvre, ce manchon portant lui-même le deuxième plateau (P$_r$).

5. Dispositif selon la revendication 4, caractérisé par le fait que l'organe récepteur comporte un flasque (32) solidaire en rotation du manchon, flasque dont le plan moyen est perpendiculaire à l'axe de l'arbre (5) formant organe de manoeuvre, lequel arbre (5) est lié en rotation à un levier de commande (33).

6. Dispositif selon l'une quelconque des revendications précédentes, caractérisé par le fait que les moyens élastiques comprennent des ressorts de rappel angulaire (21), logés dans des évidements (22, 23) prévus dans les faces en regard des plateaux, ces ressorts coopérant, à chacune de leurs extrémités, avec une butée (24) solidaire de l'un des plateaux de telle sorte que ces ressorts assurent le rappel angulaire des deux plateaux dans leur position moyenne quel que soit le sens de la rotation relative des plateaux.

7. Dispositif selon l'une quelconque des revendications précédentes, caractérisé par le fait qu'il comprend des moyens de contact électrique (25) commandés par le déplacement axial de l'un des plateaux ou de l'un des arbres, par rapport à une partie fixe, déplacement provoqué par l'écartement des plateaux par les billes, ces moyens de contact électrique servant à commander les moyens d'assistance (M) notamment lorsque ces derniers comprennent un moteur électrique (M$_E$).

8. Dispositif selon l'une quelconque des revendications 1 à 6, caractérisé par le fait qu'il comporte des moyens de contact électrique (C$_1$, C$_2$) commandés par le déplacement axial de l'un des plateaux ou de l'un des arbres, déplacement provoqué par réaction axiale d'une denture (44) d'un pignon prévue inclinée, ces moyens de contact comportant deux contacts électriques différents (C$_1$, C$_2$) commandés selon le sens de rotation.

**Claims**

1. A system for rotating a driven rotary member (A$_r$) comprising (a) an actuating member (A$_c$) adapted to drive the driven member via connecting means which develop an axial component dependent on the torque applied to the actuating member, said actuating member and said driven member being mounted so as to turn coaxially with relative axial slideability and (b) a rotary friction-type servo-mechanism (M) to facilitate the driving of the driven element, said servo-mechanism comprising a motor (M$_E$), the shaft of which is connected by friction coupling means (F) to the driven element, said friction coupling means being controlled by the relative axial displacement between the driven member and the actuating member corresponding to a predetermined torque value applied to the actuating member, characterised in that a known rotary movement transmission system (2) is provided between the actuating member and the driven member and comprises two plates (P$_c$, P$_r$) connected for rotation respectively to the actuating member and to the driven member, at least one of said plates being axially slideable, elastic return means (R) being provided to bias the plates towards one another, and balls (B) being interposed between the plates to co-operate with inclined surfaces (3, 4) provided on said plates, means being provided to limit the relative distance between the two plates in order to prevent the balls from escaping from the inclined surfaces, the plate capable of axial movement being so disposed as to co-operate with the friction coupling means (F) so that a relative rotation of one plate relatively to the other results — by co-operation of the balls with the inclined surfaces — in an axial thrust dependent on the transmitted torque, thus rendering the servo-effect progressive.

2. A system according to claim 1, characterised in that the friction coupling means comprise an annular casing (11) so enclosing the two plates (P$_c$, P$_r$) that two opposite internal surfaces of the annular casing can co-operate with the two plates to provide the friction engagement.

3. A system according to claim 2, characterised in that the outer periphery of the annular casing (11) has teeth (16, 16') adapted to co-operate with a gearwheel driven by the motor.

4. A system according to claim 1 or 2, characterised in that one of the members, more particularly the actuating member, is in the form of a shaft (5) bearing one of the plates, the other member, more particularly the driven member, being in the form of a sleeve (6') fitted around the shaft (5) forming the actuating member, said sleeve itself carrying the second plate (P$_r$).

5. A system according to claim 4, characterised in that the driven member comprises a plate (32) which is connected for rotation to the sleeve, the central plane of said plate being perpendicular to the axis of the shaft (5) forming the actuating member, said shaft (5) being connected for rotation to a control lever (33).

6. A system according to any one of the preceding claims, characterised in that the elastic means comprise angular return springs (21) housed in recesses (22, 23) formed in the facing surfaces of the plates, said springs cooperating, at each of their ends, with an abutment (24) rigidly secured to one of the plates so that said springs provide angular return of the two plates to their central position irrespective of the direction of relative rotation of the plates.

7. A system according to any one of the preceding claims, characterised in that it comprises electrical contact means (25) controlled by the axial movement of one of the plates or one of the shafts relatively to a stationary part, said movement being produced by the plates being moved apart by the balls, said electrical contact means serving to control the servo-means (M) more particularly when the latter comprise an electric motor (M$_E$).

8. A system according to any one of claims 1 to 6, characterised in that it comprises electrical contact means (C$_1$, C$_2$) controlled by the axial movement of one of the plates or one of the shafts, said movement being produced by axial reaction of inclined gearwheel teeth (44), said contact means comprising two different electrical contacts (C$_1$, C$_2$) which are driven according to the direction of rotation.

**Patentansprüche**

1. Vorrichtung zur Steuerung der Drehung eines sich drehenden Aufnahmegliedes (A$_r$), umfassend zum einen ein Betätigungsglied (A$_c$), welches das Aufnahmeglied über eine Verbindung mitzunehmen gestattet, die eine axiale Komponente liefert, welche von einem auf das Betätigungsglied ausgeübten Kraftmoment abhängt, wobei das betreffende Betätigungsglied und das Aufnahmeglied derart angeordnet sind, daß sie sich koaxial bei axialer Vorschiebbarkeit relativ zueinander zu drehen vermögen, und umfassend zum anderen einen Unterstützungsmechanismus (M), der unter Erleichterung des Antriebs des Aufnahmegliedes eine Drehung durch Reibung hervorruft und der einen Motor (M$_E$) aufweist, dessen Welle mit dem Aufnahmeglied über Reibkopplungseinrichtungen (F) verbunden ist, die durch die relative axiale Verschiebung zwischen dem Aufnahmeglied und dem Betätigungsglied entsprechend einem bestimmten Wert eines auf das Betätigungsglied ausgeübten Kraftmomentes gesteuert ist, dadurch gekennzeichnet, daß zwischen dem Betätigungsglied und dem Aufnahmeglied eine an sich bekannte Drehbewegungs-Übertragungseinrichtung (2) vorhanden ist, die zwei Platten (P$_c$, P$_r$) enthält, welche hinsichtlich der Drehung mit dem Betätigungsglied bzw. mit dem Aufnahmeglied verbunden sind, daß zumindest eine dieser Platten in axialer Richtung verschiebbar ist, daß elastische Rückstelleinrichtungen (R) vorgesenen sind, durch die die Platten einer gegenseitigen Beanspruchung ausgesetzt sind, daß zwischen den Platten Kugeln (B) vorgesehen sind, die mit auf den betreffenden Platten vorgesehenen geneigten Flächen (3, 4) zusammenwirken, daß Einrichtungen vorgesehen sind, die den relativen Abstand der beiden Platten derart begrenzen, daß verhindert ist, daß die betreffenden Kugeln aus den geneigten Flächen austreten, und daß diejenige Platte, die in axialer Richtung verschiebbar ist, so angeordnet ist, daß sie mit den Reibkupplungseinrichtungen (F) derart zusammenzuwirken vermag, daß eine relative Drehung der einen Platte in bezug auf die andere Platte durch das Zusammenwirken der Kugeln mit den geneigten Flächen hervorgerufen wird, wobei ein solcher von dem übertragenen Kraftmoment abhängiger axialer Druck vorhanden ist, daß eine fortschreitende Unterstützung sichergestellt ist.

2. Vorrichtung nach Anspruch 1, dadurch gekennzeichnet, daß die Reibkupplungseinrichtungen ein ringförmiges Gehäuse (11) aufweisen, welches die beiden Platten ($P_c$, $P_r$), derart umgibt, daß die beiden einander gegenüberliegenden Innenseiten des ringförmigen Gehäuses mit den beiden Platten zur Sicherstellung der Reibkupplung zusammenzuwirken vermögen.

3. Vorrichtung nach Anspruch 2, dadurch gekennzeichnet, daß das ringförmige Gehäuse (11) auf seinem Außenumfang Zähne (16, 16') derart aufweist, daß diese mit einem von dem Motor angetriebenen Ritzel zusammenzuwirken vermögen.

4. Vorrichtung nach Anspruch 1 oder 2, dadurch gekennzeichnet, daß eines der Glieder, insbesondere das Betätigungsglied, durch eine die eine Platte tragende Welle (5) gebildet ist und daß das andere Glied, insbesondere das Aufnahmeglied, durch eine die das Betätigungsglied bildende Welle (5) umgebende Hülse (6') gebildet ist, die ihrerseits die zweite Platte ($P_r$) trägt.

5. Vorrichtung nach Anspruch 4, dadurch gekennzeichnet, daß das Aufnahmeglied einen Kurbelarm (32) aufweist, der zur Drehung mit der Hülse fest verbunden ist und dessen ebene Fläche rechtwinklig zur Achse der das Betätigungsglied bildenden Welle (5) verläuft, die mit einem Betätigungshebel (33) drehbar verbunden ist.

6. Vorrichtung nach einem der Ansprüche 1 bis 5, dadurch gekennzeichnet, daß die elastischen Rückstelleinrichtungen winkelrückholfedern (21) enthalten, die in Aussparungen (22, 23) untergebracht sind, welche in den einander zugewandten Seiten der Platten vorgesehen sind, und daß die Federn an ihrem jeweiligen Ende mit einem Anschlag (24) zusammenwirken, der mit einer der Platten derart fest verbunden ist, daß die betreffenden Federn die winkelmäßige Zurückrufung der beiden Platten in ihre mittlere Stellung unabhängig davon sicherstellen, in welcher Richtung die relative Drehung der Platten erfolgt ist.

7. Vorrichtung nach einem der Ansprüche 1 bis 6, dadurch gekennzeichnet, daß elektrische Kontakteinrichtungen (25) vorgesehen sind, die durch die axiale Verschiebung einer der Platten oder einer der Wellen in bezug auf einen feststehenden Teil betätigt werden, wobei die Verschiebung durch ein Aufspreizen der Platten mittels der Kugeln bewirkt wird, und daß die elektrischen Kontakteinrichtungen zur Steuerung der Unterstützungseinrichtungen (M) insbesondere in dem Fall dienen, daß diese einen Elektromotor ($M_E$) enthalten.

8. Vorrichtung nach einem der Ansprüche 1 bis 6, dadurch gekennzeichnet, daß elektrische Kontakteinrichtungen ($C_1$, $C_2$) vorgesehen sind, die durch die axiale Verschiebung einer der Platten oder einer der Wellen betätigt werden, wobei die Verschiebung durch die Wirkung eines Zahnes (44) in axialer Richtung auf ein Ritzel mit Schrägverzahnung bewirkt wird, und daß die elektrischen Kontakteinrichtungen ($C_1$, $C_2$) zwei verschiedene elektrische Kontakte ($C_1$, $C_2$) umfassen, die entsprechend der Drehrichtung betätigt werden.

# Fig.1.

# Fig.6.

**0011579**

Fig.2.

Fig.3.

0011 579

Fig.4.

Fig.5.